# EUROPEAN PATENT APPLICATION

(11) **EP 4 765 458 A1**
(43) Date of publication of application: **24.06.2026**
(21) Application number: 25826995.0
(22) Date of filing: 04.03.2025
(51) Int. Cl.: H01M 50/567

(54) **BATTERY CELL AND BATTERY PACK AND VEHICLE INCLUDING SAME**

(30) Priority: 24.06.2024 KR 20240082170; 28.02.2025 KR 20250026699
(71) Applicant: LG Energy Solution, Ltd., Seoul 07335 (KR)
(72) Inventor: JO, Min-Ki, Daejeon 34122 (KR); KIM, Do-Gyun, Daejeon 34122 (KR); JANG, Hyeon-Sic, Daejeon 34122 (KR); CHUNG, Gu-Jin, Daejeon 34122 (KR); JUNG, Sang-Suk, Daejeon 34122 (KR)
(74) Representative: Goddar, Heinz J.
(86) International application number: PCT/KR2025/099522
(87) International publication number: WO 2026/005579

(57) **Abstract**

A battery cell according to one embodiment of the present disclosure includes an electrode assembly in which a first electrode, a second electrode, and a separator interposed therebetween are wound around a winding axis to define a core and an outer circumferential surface, wherein the first electrode includes a first uncoated portion that is not coated with an active material layer along the winding direction; a battery housing including an opening on one side and configured to accommodate the electrode assembly through the opening; a cell terminal that penetrates a closed portion of the battery housing positioned on the opposite side of the opening and is exposed to the outside of the battery housing, is electrically connected to the first uncoated portion, and has at least one fixing structure provided in a direction facing the outside of the battery housing; and an insulating gasket interposed between the battery housing and the cell terminal on the closed portion side of the battery housing.

## Description

### TECHNICAL FIELD

The present disclosure relates to a battery cell, and a battery pack and a vehicle including the same.

This application is based on and claims priority from Korean Patent Application No. 10-2024-0082170, filed on June 24, 2024 and Korean Patent Application No. 10-2025-0026699, filed on February 28, 2025, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Depending on the charging and discharging capacity of a battery pack required by an electric vehicle (EV) or a hybrid electric vehicle (HEV), multiple battery cells are connected in series/parallel to configure a battery pack. At this time, it is common to first configure a battery module including at least one battery cell, and then configure a battery pack or a battery rack by adding other components using this at least one battery module. Alternatively, in recent years, battery packs in the form of cell to pack, in which a plurality of battery cells are directly stored in a pack housing or the like without being modularized are also being manufactured.

Meanwhile, in a conventional battery cell, the electrode terminal electrically connected to the first electrode is riveted and coupled to a through hole formed in the closed portion of the battery housing electrically connected to the second electrode. Specifically, after the electrode terminal is inserted into the through hole, a part for riveting is inserted from the opening side of the housing to press the inner portion of the electrode terminal toward the inner surface of the closed surface of the housing. At this time, the process of pressing the inner portion of the electrode terminal toward the outer side in the circumferential direction should be performed, and it is difficult to form a flat surface on the electrode terminal, making it difficult to maximize the area where the electrode terminal is coupled to the current collector.

Accordingly, a spinning method may be utilized to rivet the electrode terminal. The spinning method is a method of pressing the inner portion of the electrode terminal toward the inner surface of the closed surface of the housing by applying a rotational force to a place to be riveted. However, when riveting a circular electrode terminal in a conventional cylindrical battery, the electrode terminal may not be fixed, and thus there is a problem that the riveting process may not be performed using the spinning method.

### DISCLOSURE

### Technical Problem

The present disclosure is designed to solve the above-described problems, and therefore the present disclosure is directed to improving productivity or processability in the manufacture of battery cells.

Additionally, the present disclosure is directed to improving welding quality by maximizing the area where the terminal is coupled to the current collector.

Furthermore, the present disclosure is directed to improving the energy density of the battery cell.

However, technical problems to be solved by the present disclosure are not limited to the above-described problems, and other problems not mentioned herein may be clearly understood by those having ordinary skill in the art from the following description of the present disclosure.

### Technical Solution

A battery cell according to one embodiment of the present disclosure for solving the above-described problems includes an electrode assembly in which a first electrode, a second electrode, and a separator interposed therebetween are wound around a winding axis to define a core and an outer circumferential surface, wherein the first electrode includes a first uncoated portion that is not coated with an active material layer along the winding direction; a battery housing including an opening on one side and configured to accommodate the electrode assembly through the opening; a cell terminal that penetrates a closed portion of the battery housing positioned on the opposite side of the opening and is exposed to the outside of the battery housing, is electrically connected to the first uncoated portion, and has at least one fixing structure provided in a direction facing the outside of the battery housing; and an insulating gasket interposed between the battery housing and the cell terminal on the closed portion side of the battery housing.

In one aspect of the present disclosure, the fixing structure may be configured to prevent the cell terminal from rotating in the circumferential direction.

In another aspect of the present disclosure, the fixing structure may include an engraved groove recessed toward the inside of the cell terminal.

Preferably, the cross-section of the engraved groove may be configured in a polygonal shape.

In still another aspect of the present disclosure, the fixing structure may be provided at the center of the cell terminal.

In still another aspect of the present disclosure, the fixing structure may include a plurality of engraved grooves.

In one aspect of the present disclosure, the cell terminal may include a terminal exposure portion exposed to the outside of the battery housing; a terminal insertion portion that penetrates the closed portion of the battery housing and is positioned inside the battery housing; and a terminal connection portion connecting the terminal exposure portion and the terminal insertion portion and penetrating the battery housing.

At this time, the diameter of the terminal exposure portion may be configured to be larger than or equal to the diameter of the terminal insertion portion.

In another aspect of the present disclosure, the diameter of the terminal insertion portion may be configured to be at least twice larger than the diameter of the terminal connection portion.

In still another aspect of the present disclosure, the axial thickness of the terminal insertion portion may be configured to be smaller than the axial thickness of the terminal exposure portion.

In still another aspect of the present disclosure, the terminal insertion portion may be configured to be parallel to the terminal exposure portion.

In one aspect of the present disclosure, the insulating gasket may include a gasket exposure portion interposed between the terminal exposure portion and the battery housing; and a gasket insertion portion interposed between the terminal insertion portion and the battery housing.

Preferably, the diameter of the gasket insertion portion may be configured to be larger than or equal to the diameter of the terminal insertion portion.

Meanwhile, the present disclosure provides a battery pack including at least one battery cell according to the above-described embodiment.

In addition, the present disclosure provides a vehicle including at least one battery pack according to the above-described embodiment.

### Advantageous Effects

According to the present disclosure, productivity or processability may be improved in the manufacture of battery cells.

Additionally, according to the present disclosure, welding quality may be improved by maximizing the area where the terminal is coupled to the current collector.

Furthermore, according to the present disclosure, the energy density of the battery cell may be improved.

However, the effects to be obtained by the present disclosure are not limited to the above-described effects, and other effects not mentioned herein may be clearly understood by those having ordinary skill in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a view for describing a battery cell according to one embodiment of the present disclosure.
FIG. 2 is a longitudinal cross-sectional view of FIG. 1.
FIG. 3 is an enlarged cross-sectional view of the upper part of the battery cell of FIG. 1.
FIG. 4 is a view for describing a terminal according to one embodiment of the present disclosure.
FIG. 5 is a view for describing a terminal according to another embodiment of the present disclosure.
FIG. 6 is a view for describing a terminal according to still another embodiment of the present disclosure.
FIG. 7 is a view for describing a terminal according to still another embodiment of the present disclosure.
FIG. 8 is a view for describing a terminal according to still another embodiment of the present disclosure.
FIG. 9 is a view showing a state before a terminal according to one embodiment of the present disclosure is riveted.
FIG. 10 is a view for describing a process in which a terminal according to one embodiment of the present disclosure is being riveted.
FIG. 11 is a view showing a state in which a terminal according to one embodiment of the present disclosure is riveted.
FIG. 12 is a view for describing a battery pack including the battery cell of FIG. 1.
FIG. 13 is a view for describing a vehicle including the battery pack of FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, to help understanding of the present disclosure, the accompanying drawings are not drawn to actual scale, but dimensions of some components may be exaggerated. Additionally, the same reference numeral may be assigned to the same component in different embodiments.

A statement that two objects of comparison are identical means 'substantially identical'. Therefore, 'substantially identical' may include deviations considered to be low in the art, for example, deviations within 5%. Additionally, uniformity of a certain parameter in a predetermined area may mean that it is uniform in terms of an average.

Although the first, second, and the like are used to describe various components, it is obvious that these components are not limited by these terms. These terms are used only to distinguish one component from another component, and unless expressly stated to the contrary, it is obvious that the first component may be the second component.

As used herein, unless expressly stated to the contrary, each component may be singular or plural.

Placing any component on the "upper (or lower)" of a component or "top (or bottom)" of a component may mean not only that any component is disposed in contact with the top surface (or bottom surface) of the component, but also that other components may be interposed between the component and any component disposed above (or below) the component.

Additionally, when it is described that a component is "linked", "coupled", or "connected" to another component, the components may be directly linked or connected to each other, but it should be understood that still another component may be "interposed" between each component, or each component may be "linked", "coupled", or "connected" through still another component.

As used herein, when referring to "A and/or B", it means A, B or A and B, unless expressly stated to the contrary, and when referring to "C to D", it means C or more and D or less, unless expressly stated to the contrary.

For convenience of description, the direction along the longitudinal direction of the winding axis of the electrode assembly 10 wound in the form of a jelly roll is referred to as the axial direction in this specification. And, the direction surrounding the winding axis is referred to as the circumferential direction or the perimeter direction. And, the direction approaching or moving away from the winding axis is referred to as the radial direction. In particular, the direction approaching the winding axis is referred to as the centripetal direction, and the direction moving away from the winding axis is referred to as the centrifugal direction.

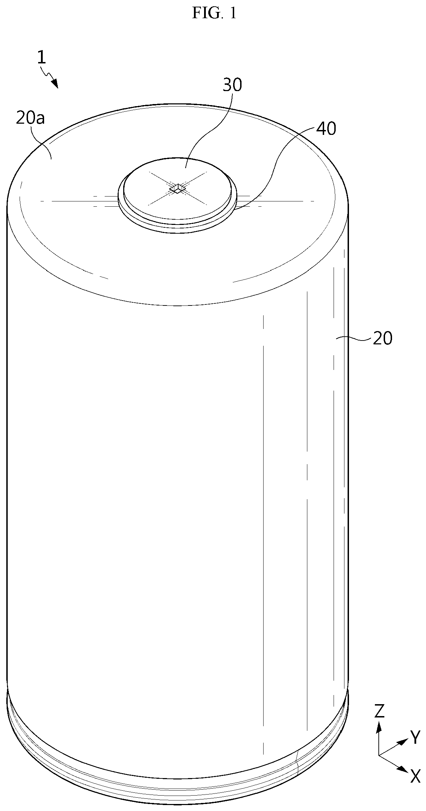

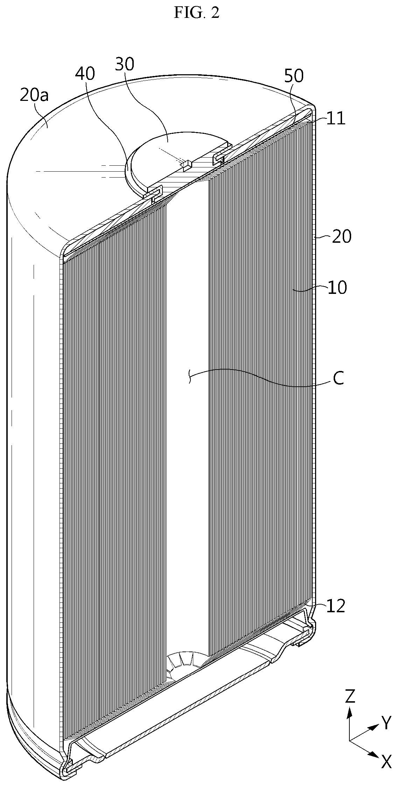

FIG. 1 is a view for describing a battery cell 1 according to one embodiment of the present disclosure, and FIG. 2 is a longitudinal cross-sectional view of FIG. 1.

Referring to FIGS. 1 and 2, a battery cell 1 according to one embodiment of the present disclosure may be, for example, a cylindrical battery cell. The battery cell 1 includes an electrode assembly 10, a battery housing 20, a cell terminal 30, and an insulating gasket 40. The battery cell 1 may further include a current collector 50 and/or an insulator in addition to the components described above. The present disclosure is not limited by the shape of the battery, and may be applied to other types of batteries, for example, prismatic batteries.

Referring to FIG. 2, the electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite to that of the first electrode.

The electrode assembly 10 may have, for example, a jelly-roll structure. That is, the electrode assembly 10 may be manufactured by winding a stack formed by stacking a first electrode plate and a second electrode plate having a sheet shape at least once with a separator interposed therebetween, in one direction based on the winding center C. In this case, an additional separator may be provided on the outer circumferential surface of the electrode assembly 10 for insulation from the battery housing 20. Any jelly-roll structure known in the art may be applied to the present disclosure without limitation.

The first electrode includes a first electrode plate and a first electrode active material applied onto one or both surfaces of the first electrode plate. The first electrode includes a first uncoated portion that is not coated with an active material layer along the winding direction. That is, at one end of the first electrode plate in the width direction (direction parallel to the Z-axis), there is an uncoated portion where the first electrode active material is not applied. The uncoated portion functioning as a first electrode tab is referred to as a first uncoated portion 11 hereinafter. The first uncoated portion 11 is provided on the upper part of the electrode assembly 10 accommodated in the battery housing 20 in the height direction (direction parallel to the Z-axis). That is, the first electrode plate includes the first uncoated portion 11 that is not coated with an active material layer at a long side end and is exposed to the outside of the separator, and a part of the first uncoated portion 11 is used as an electrode tab in itself. The first uncoated portion 11 may be, for example, a positive electrode tab.

Meanwhile, at least a part of the first uncoated portion 11 may include a plurality of segmented pieces divided along the winding direction of the electrode assembly 10. In this case, the plurality of segmented pieces may be bent along the radial direction of the electrode assembly 10. The plurality of bent segmented pieces may be overlapped in multiple layers.

The second electrode includes a second electrode plate and a second electrode active material applied onto one or both surfaces of the second electrode plate. At the other end of the second electrode plate in the width direction (direction parallel to the Z-axis), there is an uncoated portion where the second electrode active material is not applied. The uncoated portion functioning as a second electrode tab is referred to as the second uncoated portion 12 hereinafter. The second uncoated portion 12 is provided on the lower part of the electrode assembly 10 accommodated in the battery housing 20 in the height direction (direction parallel to the Z-axis). That is, the second electrode plate includes the second uncoated portion 12 that is not coated with an active material layer at a long side end and is exposed to the outside of the separator, and at least a part of the second uncoated portion 12 is used as an electrode tab in itself. The second uncoated portion 12 may be, for example, a negative electrode tab.

Meanwhile, at least a part of the second uncoated portion 12 may include a plurality of segmented pieces divided along the winding direction of the electrode assembly 10. In this case, the plurality of segmented pieces may be bent along the radial direction of the electrode assembly 10. The plurality of bent segmented pieces may be overlapped in multiple layers.

The first uncoated portion 11 and the second uncoated portion 12 extend in opposite directions along the height direction (direction parallel to the Z-axis) of the battery cell 1. The first uncoated portion 11 extends toward the closed portion of the battery housing 20, and the second uncoated portion 12 extends toward the opening of the battery housing 20.

In the present disclosure, the positive electrode active material coated on the positive electrode plate and the negative electrode active material coated on the negative electrode plate may be used without limitation as long as they are active materials known in the art.

Referring to FIGS. 1 and 2, the battery housing 20 is a roughly cylindrical receptacle with an opening formed at one side, and is made of a conductive material such as metal, for example. The material of the battery housing 20 may include, for example, steel, stainless steel, nickel-plated iron, or the like. The upper surface positioned opposite to the opening is referred to as a closed portion. The side wall portion and the closed portion of the battery housing 20 may be formed integrally. Alternatively, the side wall portion and the closed portion of the battery housing 20 may be provided separately from each other and then be coupled to each other by welding or the like. The upper surface (a surface parallel to the X-Y plane) of the battery housing 20, that is, the outer surface of the closed portion, may have a roughly flat shape. The battery housing 20 accommodates the electrode assembly 10 through the opening formed at one side and accommodates an electrolyte, as well.

The battery housing 20 is electrically connected to the electrode assembly 10. The battery housing 20 is electrically connected to, for example, the second uncoated portion 12 of the electrode assembly 10. In this case, the battery housing 20 has the same polarity as the second uncoated portion 12.

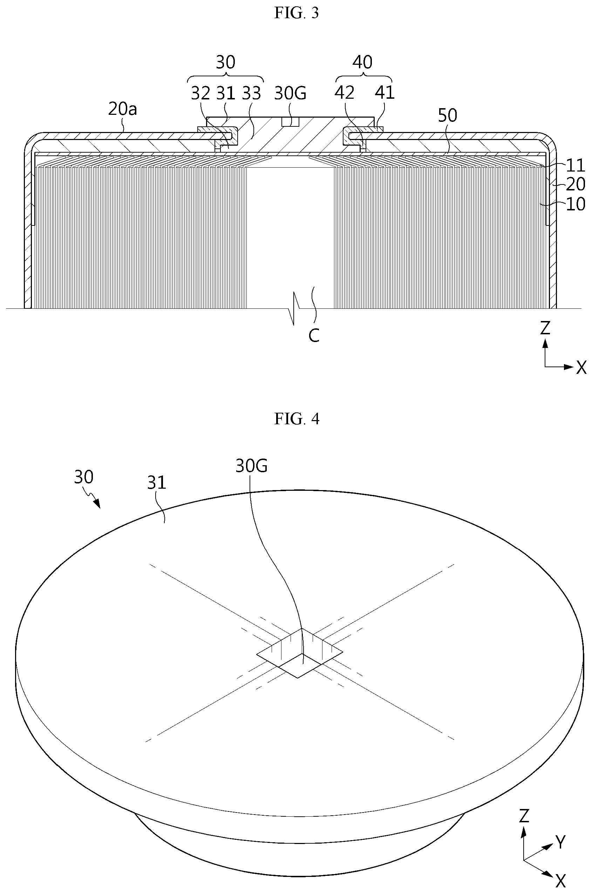

FIG. 3 is an enlarged cross-sectional view of the upper part of the battery cell 1 of FIG. 1.

Referring to FIG. 3, the cell terminal 30 is made of a conductive metal material. The material of the cell terminal 30 may be, for example, aluminum (Al). When the material of the cell terminal 30 is aluminum, processing may be facilitated during rivet processing to be described later, and 10 series aluminum having relatively low electrical resistance may be applied.

The cell terminal 30 penetrates the closed portion of the battery housing 20, that is, the surface (surface parallel to the X-Y plane) positioned on the opposite side of the opening of the battery housing 20. For example, the cell terminal 30 may be configured to penetrate the center of the closed portion. That is, the cell terminal 30 may penetrate the closed portion of the battery housing 20 positioned on the opposite side of the opening and be exposed to the outside of the battery housing 20.

The cell terminal 30 may be electrically connected to the first uncoated portion 11 of the electrode assembly 10. In this case, the cell terminal 30 has a first polarity. Therefore, the cell terminal 30 may function as a first electrode cell terminal 30 in the battery cell 1 of the present disclosure. When the cell terminal 30 has the first polarity in this way, the cell terminal 30 is electrically insulated from the battery housing 20 having the second polarity.

FIG. 4 is a view for describing a cell terminal 30 according to one embodiment of the present disclosure.

Referring to FIG. 4, in one aspect of the present disclosure, the cell terminal 30 may have at least one fixing structure in at least a partial area of the battery housing 20. Preferably, the cell terminal 30 may have at least one fixing structure in a direction facing the outside of the battery housing 20. The fixing structure may be configured to prevent movement of the cell terminal 30. For example, the fixing structure may be configured to prevent the cell terminal 30 from moving forward, backward, left, and right. Preferably, the fixing structure may be configured to prevent the cell terminal 30 from rotating in the circumferential direction.

According to this configuration of the present disclosure, a riveting method by means of a spinning method may be applied. The spinning method refers to a method of pressing a rivet by applying a rotational force to a place to be riveted, and it is necessary to fix the opposite side in order to apply the rotational force. According to the fixing structure of the present disclosure, the cell terminal 30 has a circular structure, but as movement is prevented by the fixing structure, the spinning method may be applied to the cell terminal 30. Accordingly, the cell terminal 30 of the present disclosure may be riveted by a single process spinning method. Accordingly, compared to the conventional riveting method that requires multiple processes, the management points for each process may be reduced. Additionally, compared to the conventional riveting method that requires multiple processes, the single process spinning method has the advantage of reducing foreign substances and facility investment costs.

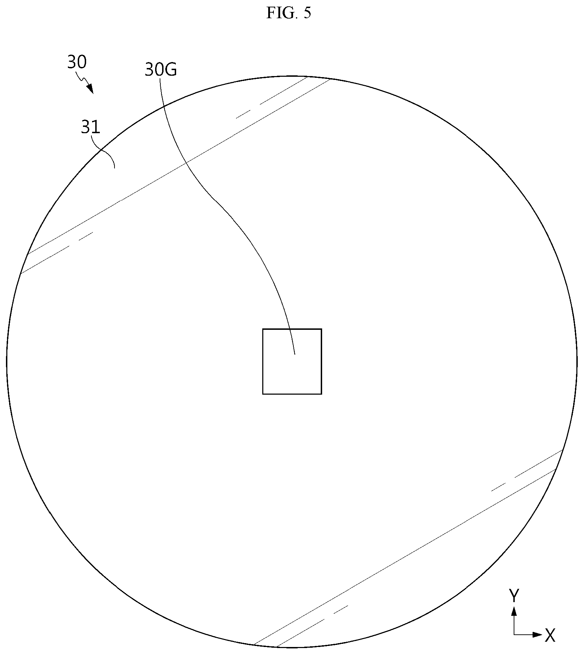

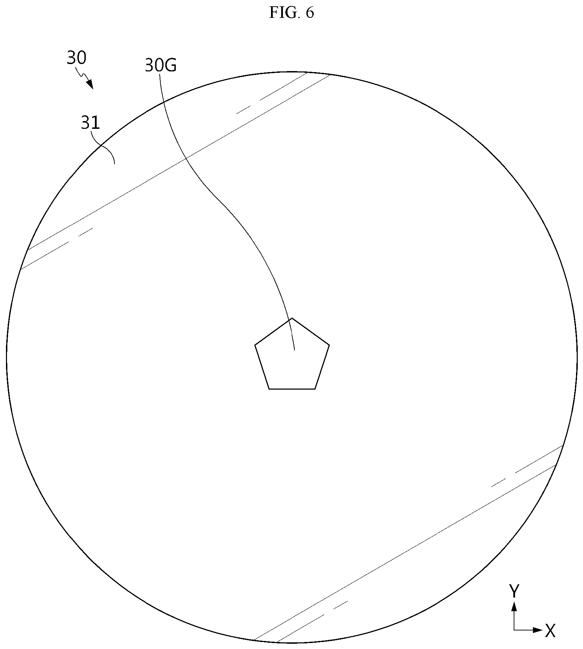

FIG. 5 is a view for describing a cell terminal 30 according to another embodiment of the present disclosure, and FIGS. 6 to 8 are views for describing cell terminals 30 according to still another embodiment of the present disclosure.

In one embodiment of the present disclosure, the fixing structure may include an engraved groove 30G recessed toward the inside of the cell terminal 30. At this time, the cross-section of the engraved groove 30G may be configured in a polygonal shape. That is, the cross-section of the engraved groove 30G is preferably configured in a shape having at least three vertices.

In another embodiment of the present disclosure, referring to FIG. 5, the cross-section of the engraved groove 30G may be configured in a square shape. In this case, since the engraved groove 30G is recessed to a predetermined depth, the engraved groove 30G may be configured in the shape of a square pillar.

In still another embodiment of the present disclosure, referring to FIG. 6, the cross-section of the engraved groove 30G may be configured in a regular pentagonal shape. In this case, since the engraved groove 30G is recessed to a predetermined depth, the engraved groove 30G may be configured in the shape of a regular pentagonal pillar.

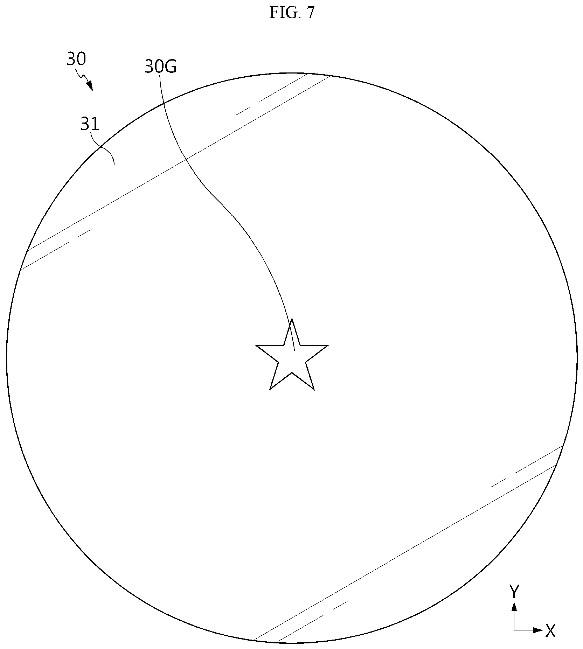

In still another embodiment of the present disclosure, referring to FIG. 7, the cross-section of the engraved groove 30G may be configured in a star shape. In this case, since the engraved groove 30G is recessed to a predetermined depth, the engraved groove 30G may be configured in the shape of a star pillar.

In this way, according to the structure in which the cross-section of the engraved groove 30G is configured in a polygonal shape, even if spinning is applied to the cell terminal 30 having a circular cross-section, the cell terminal 30 itself may be effectively prevented from rotating. That is, by inserting a pillar having a shape matching the engraved groove 30G into the engraved groove 30G to provide a fixed shaft, the cell terminal 30 may be effectively prevented from rotating in the circumferential direction. Accordingly, the spinning method may be applied when riveting the cell terminal 30, and management points, foreign substances, facility investment costs, and the like may be reduced compared to the conventional riveting process.

Referring to FIGS. 4 to 7, the fixing structure may be provided at the center of the cell terminal 30. Preferably, the fixing structure may be provided on a concentric axis with the rotation axis of the spinning device S that applies rotation to the cell terminal 30. In an embodiment in which the fixing structure is configured in the shape of a square pillar, the center of the square pillar may be positioned on a concentric axis with the rotation axis of the spinning device S.

According to this structure, the rotational force received by the cell terminal 30 may be uniformly distributed to the cell terminal 30. That is, when the fixing structure is positioned off-center from the cell terminal 30, a phenomenon in which the rotational force received by the cell terminal 30 during the spinning method is concentrated on a part of the cell terminal 30 may occur. In this case, the possibility of damage to the fixing structure and/or the fixed shaft increases. However, according to the above configuration of the present disclosure, the rotational force received by the cell terminal 30 is evenly distributed to the cell terminal 30, so that stable riveting may be performed.

In still another embodiment of the present disclosure, the fixing structure may include a plurality of engraved grooves 30G.

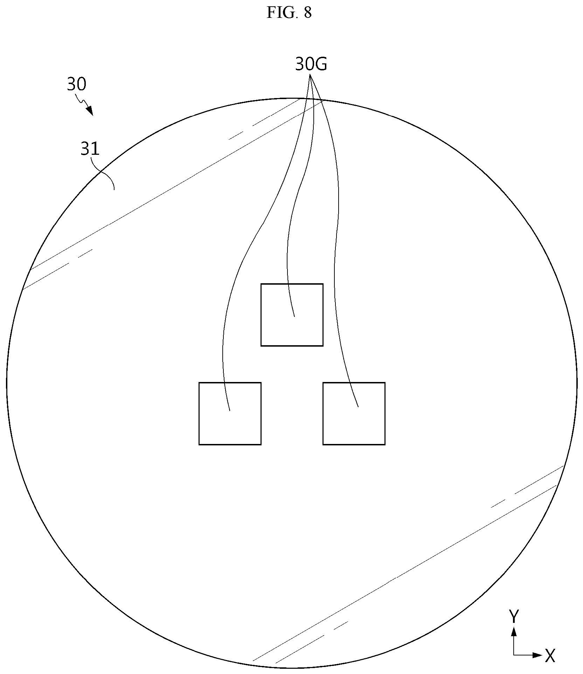

For example, referring to FIG. 8, engraved grooves 30G having a square cross-section may be disposed at predetermined intervals. In this case, the center of the figure connecting the centers of the plurality of engraved grooves 30G may be provided at the center of the cell terminal 30. Specifically, referring to FIG. 8, when the centers of each of the engraved grooves 30G having a square cross-section are connected, an equilateral triangle is formed. At this time, the center of the equilateral triangle may be provided on a concentric axis with the rotation axis of the spinning device S that applies rotation to the cell terminal 30.

According to this structure, the rotational force received by the cell terminal 30 may be uniformly distributed to the cell terminal 30. Additionally, according to the above structure, the possibility of damage to the fixing structure and/or the fixed shaft may be reduced.

As described above, the features of the present disclosure have been described based on various embodiments of the present disclosure such as FIGS. 5 to 8, but it is obvious that the embodiments of the present disclosure are not limited to the above embodiments.

Referring to FIGS. 3 and 4 again, the cell terminal 30 may include a terminal exposure portion 31, a terminal insertion portion 32, and a terminal connection portion 33.

The terminal exposure portion 31 is exposed to the outside of the battery housing 20. The terminal exposure portion 31 may be positioned approximately at the center of the closed portion of the battery housing 20. That is, the cell terminal 30 may penetrate the approximate center of the closed portion. The terminal exposure portion 31 may have a shape extending approximately parallel to the closed portion.

The terminal insertion portion 32 may have a shape bent toward the inner surface of the closed portion of the battery housing 20. Therefore, the maximum width of the terminal insertion portion 32 after the riveting process for fixing the cell terminal 30 is performed may be formed to be larger than the maximum width of the hole formed in the battery housing 20 to allow the terminal insertion portion 32 to pass through. The terminal insertion portion 32 may have a shape extending approximately parallel to the closed portion. That is, the terminal insertion portion 32 may have a shape extending approximately parallel to the terminal exposure portion 31. For example, the terminal exposure portion 31 and the terminal insertion portion 32 may be configured as structures having a roughly disk shape parallel to each other. Of course, the shape of the terminal insertion portion 32 is not limited thereto.

Referring to FIG. 3, the terminal connection portion 33 may connect the terminal exposure portion 31 and the terminal insertion portion 32. The terminal connection portion 33 may penetrate the battery housing 20. Specifically, the terminal connection portion 33 may penetrate the closed portion of the battery housing 20, and more specifically, the terminal connection portion 33 may penetrate the approximate center of the closed portion of the battery housing 20. The terminal connection portion 33 may extend in a direction approximately parallel to the winding axis of the electrode assembly 10. The terminal exposure portion 31 may be positioned at one end of the terminal connection portion 33. The terminal exposure portion 31 may be configured to extend horizontally from one end of the terminal connection portion 33. The terminal insertion portion 32 may be positioned at the other end of the terminal connection portion 33. The terminal insertion portion 32 may be configured to extend horizontally from the other end of the terminal connection portion 33.

The terminal connection portion 33 may have a roughly cylindrical shape extending in a direction parallel to the winding axis of the electrode assembly 10. However, the shape of the terminal connection portion 33 is not limited thereto, and it will be said that the shape is within the scope of the present disclosure as long as it is hollow therein and extends in the direction of the winding axis.

In one aspect of the present disclosure, the diameter of the terminal exposure portion 31 may be configured to be larger than or equal to the diameter of the terminal insertion portion 32. Preferably, the diameter of the terminal exposure portion 31 may be configured to be larger than the diameter of the terminal insertion portion 32. Meanwhile, the diameter of the terminal exposure portion 31 may be configured to be at least about three times larger than the diameter of the connection portion.

In another aspect of the present disclosure, the diameter of the terminal insertion portion 32 may be configured to be at least about twice larger than the diameter of the terminal connection portion 33. At this time, the diameter of the terminal insertion portion 32 refers to the maximum width of the terminal insertion portion 32 after the riveting process for fixing the cell terminal 30 is performed.

According to the above configuration, the diameter after the riveting process is performed may be secured, so that the internal welding surface may be secured to a certain level or higher. The terminal insertion portion 32 may be welded and coupled to the first uncoated portion or the current collector 50, and according to the above configuration, the coupling area with the first uncoated portion or the current collector 50 may be expanded. Accordingly, welding quality may be improved.

In still another aspect of the present disclosure, the axial thickness of the terminal insertion portion 32 may be configured to be smaller than the axial thickness of the terminal exposure portion 31. That is, according to the present disclosure, riveting by a spinning method is possible. Accordingly, the axial thickness of the terminal insertion portion 32 may be effectively reduced. At the same time, the diameter of the terminal insertion portion 32 may be relatively increased as much as the axial thickness of the terminal insertion portion 32 is reduced.

Accordingly, according to the present disclosure, the riveting height may be effectively reduced compared to the prior art. That is, according to the above configuration of the present disclosure, riveting may be performed at a minimum height. Accordingly, the energy density of the battery cell 1 may be improved. At the same time, the diameter after the riveting process is performed may be secured, so that welding quality may be improved.

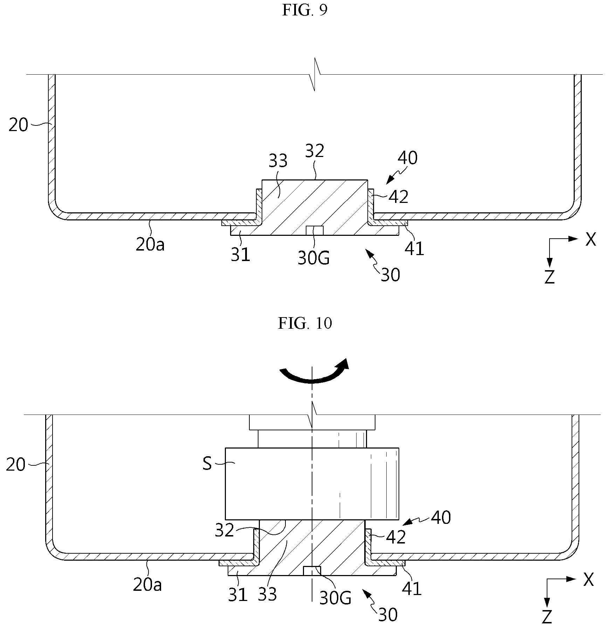

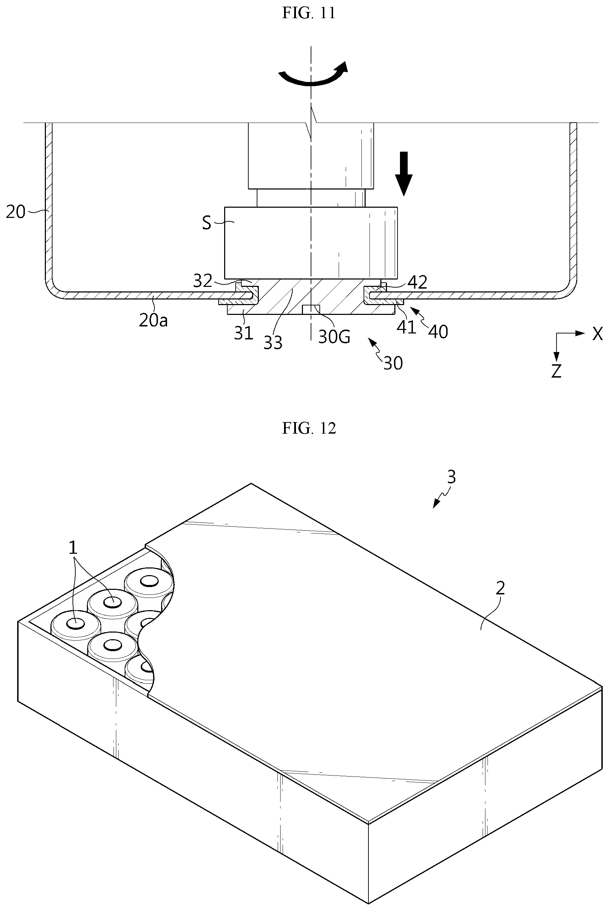

FIG. 9 is a view showing a state before a cell terminal 30 according to one embodiment of the present disclosure is riveted, and FIG. 10 is a view for describing a process in which a cell terminal 30 according to one embodiment of the present disclosure is being riveted. FIG. 11 is a view showing a state in which a cell terminal 30 according to one embodiment of the present disclosure is riveted.

Referring to FIG. 9, before the riveting process is performed, the terminal insertion portion 32 may be configured in a roughly cylindrical shape. At this time, the end of the terminal insertion portion 32 may have a shape extending approximately horizontally. That is, the end of the terminal insertion portion 32 may be configured to be approximately parallel to the closed portion of the battery housing 20. The end of the terminal insertion portion 32 provides a surface in contact with the spinning device S for applying the spinning method. In this case, the cross-section of the cell terminal 30 has a roughly T shape. That is, the cell terminal 30 is inserted into the hole of the closed portion, and at this time, an insulating gasket 40 is interposed between the cell terminal 30 and the battery housing 20.

Referring to FIG. 10, the spinning device S is applied to the end of the terminal insertion portion 32 having a roughly cylindrical shape. The spinning device S has the same rotation axis as the central axis of the battery cell 1. The spinning device S presses the terminal insertion portion 32 downward while rotating around the rotation axis. Accordingly, the terminal insertion portion 32 is pressed downward by the spinning device S and deformed in shape.

Referring to FIG. 11, the terminal insertion portion 32 is pressed by the spinning device S to increase its diameter. The part having the increased diameter has a shape roughly like a flange portion. The flange portion is configured to have a roughly disk shape and extends horizontally. At this time, the terminal insertion portion 32 may extend in a direction parallel to the terminal exposure portion 31. In this way, the thickness and diameter of the terminal insertion portion 32 may be adjusted according to the degree of pressing of the spinning device S. If the thickness of the terminal insertion portion 32 becomes thicker, the diameter decreases, and if the thickness becomes thinner, the diameter increases. According to the present disclosure, the diameter may be increased while effectively reducing the thickness of the terminal insertion portion 32. Accordingly, it is possible to expect to secure a welding area and improve energy density.

Referring to FIG. 3 again, the insulating gasket 40 may be provided on the closed portion side of the battery housing 20. The insulating gasket 40 may be interposed between the battery housing 20 and the cell terminal 30.

The insulating gasket 40 may include a gasket exposure portion 41 and a gasket insertion portion 42. The gasket exposure portion 41 is interposed between the terminal exposure portion 31 of the cell terminal 30 and the battery housing 20. The gasket exposure portion 41 may extend longer than the terminal exposure portion 31, and thus may be exposed to the outside of the terminal exposure portion 31 when the battery cell 1 is viewed from above. That is, the diameter of the gasket exposure portion 41 may be configured to be larger than or equal to the diameter of the terminal exposure portion 31.

The gasket insertion portion 42 is interposed between the terminal insertion portion 32 of the cell terminal 30 and the battery housing 20. The gasket insertion portion 42 may be deformed together during riveting of the terminal insertion portion 32 to be in close contact with the inner surface of the closed portion of the battery housing 20. The insulating gasket 40 may be made of, for example, a resin material having insulation and elasticity.

The diameter of the gasket insertion portion 42 may be configured to be larger than or equal to the diameter of the terminal insertion portion 32. Preferably, the gasket insertion portion 42 may be configured to at least partially surround the end of the terminal insertion portion 32. According to this configuration, the electrical insulation performance between the battery housing 20 and the cell terminal 30 may be effectively secured.

Meanwhile, the battery cell 1 may further include a current collector 50 configured to be electrically connected to the first electrode. At this time, at least a part of the current collector 50 may be coupled to the terminal insertion portion 32 of the cell terminal 30.

Referring to FIGS. 2 and 3, the current collector 50 is coupled to the upper part of the electrode assembly 10. The current collector 50 is made of a conductive metal material and is electrically connected to the first uncoated portion 11. For example, the current collector 50 may be coupled onto a coupling surface formed by bending an end of the first uncoated portion 11 in a direction parallel to the current collector 50.

Referring to FIG. 3, the current collector 50 may be coupled to the upper part of the electrode assembly 10. Additionally, the current collector 50 may be coupled to the cell terminal 30. That is, the current collector 50 is interposed between the first uncoated portion 11 of the electrode assembly 10 and the cell terminal 30 to electrically connect the first uncoated portion 11 of the electrode assembly 10 and the cell terminal 30. The current collector 50 is made of a conductive metal material.

Referring to FIG. 3 again, the insulator may be provided between the current collector 50 and the inner surface of the battery housing 20. The insulator prevents contact between the current collector 50 and the battery housing 20. The insulator may be interposed between the upper end of the outer circumferential surface of the electrode assembly 10 and the inner surface of the battery housing 20. That is, the insulator may be interposed between the first uncoated portion 11 and the inner surface of the side wall portion of the battery housing 20. This is to prevent contact between the first uncoated portion 11 extending toward the closed portion of the battery housing 20 and the inner circumferential surface of the battery housing 20.

FIG. 12 is a view for describing a battery pack including the battery cell 1 according to one embodiment of the present disclosure.

Referring to FIG. 12, a battery pack 3 according to one embodiment of the present disclosure includes a battery assembly in which a plurality of battery cells 1 according to one embodiment of the present disclosure as described above are electrically connected and a pack housing 2 accommodating the same. In the drawings of the present disclosure, components such as a busbar for electrical connection, a cooling unit, a power terminal, and the like are omitted for convenience of illustration. Additionally, the battery pack 3 may further include various components, for example, components of a battery pack 3 known at the time of filing of the present disclosure, such as a BMS, a pack case, a relay, a current sensor, and the like.

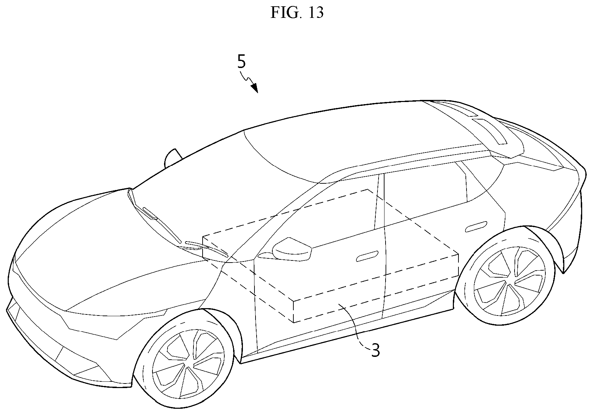

FIG. 13 is a view for describing a vehicle including the battery pack 3 of FIG. 12.

Referring to FIG. 13, a vehicle 5 according to one embodiment of the present disclosure may be, for example, an electric vehicle, a hybrid vehicle, or a plug-in hybrid vehicle, and includes a battery pack 3 according to one embodiment of the present disclosure. The vehicle 5 includes a four-wheeled vehicle and a two-wheeled vehicle. The vehicle 5 operates by receiving power from the battery pack 3 according to one embodiment of the present disclosure. Additionally, the vehicle 5 according to the present disclosure may further include various other components included in the vehicle in addition to this battery cell 1 or battery pack 3. For example, the vehicle 5 according to the present disclosure may further include a vehicle body, a motor, a control device such as an electronic control unit (ECU), and the like in addition to the battery cell 1 according to the present disclosure.

Meanwhile, the terms indicating directions as used herein such as upper and lower are used for convenience of description only, and it is obvious to those having ordinary skill in the art that the terms may change depending on the position of the stated element or an observer.

The present disclosure has been described hereinabove with reference to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

### [Explanation of Reference Signs]

5: vehicle
3: battery pack
2: pack housing
1: battery cell
10: electrode assembly
11: first uncoated portion
12: second uncoated portion
C: winding center
20: battery housing
20a: outer surface
30: cell terminal
31: terminal exposure portion
32: terminal insertion portion
33: terminal connection portion
30G: engraved groove
40: insulating gasket
41: gasket exposure portion
42: gasket insertion portion
50: current collector

## Claims

1. A battery cell comprising:
an electrode assembly in which a first electrode, a second electrode, and a separator interposed therebetween are wound around a winding axis to define a core and an outer circumferential surface, wherein the first electrode comprises a first uncoated portion that is not coated with an active material layer along the winding direction;
a battery housing comprising an opening on one side and configured to accommodate the electrode assembly through the opening;
a cell terminal that penetrates a closed portion of the battery housing positioned on the opposite side of the opening and is exposed to the outside of the battery housing, is electrically connected to the first uncoated portion, and has at least one fixing structure provided in a direction facing the outside of the battery housing; and
an insulating gasket interposed between the battery housing and the cell terminal on the closed portion side of the battery housing.

2. The battery cell according to claim 1,
wherein the fixing structure is configured to prevent the cell terminal from rotating in the circumferential direction.

3. The battery cell according to claim 1,
wherein the fixing structure comprises an engraved groove recessed toward the inside of the cell terminal.

4. The battery cell according to claim 3,
wherein the cross-section of the engraved groove is configured in a polygonal shape.

5. The battery cell according to claim 1,
wherein the fixing structure is provided at the center of the cell terminal.

6. The battery cell according to claim 1,
wherein the fixing structure comprises a plurality of engraved grooves.

7. The battery cell according to claim 1,
wherein the cell terminal comprises:
a terminal exposure portion exposed to the outside of the battery housing;
a terminal insertion portion that penetrates the closed portion of the battery housing and is positioned inside the battery housing; and
a terminal connection portion connecting the terminal exposure portion and the terminal insertion portion and penetrating the battery housing.

8. The battery cell according to claim 7,
wherein the diameter of the terminal exposure portion is configured to be larger than or equal to the diameter of the terminal insertion portion.

9. The battery cell according to claim 7,
wherein the diameter of the terminal insertion portion is configured to be at least twice larger than the diameter of the terminal connection portion.

10. The battery cell according to claim 7,
wherein the axial thickness of the terminal insertion portion is configured to be smaller than the axial thickness of the terminal exposure portion.

11. The battery cell according to claim 7,
wherein the terminal insertion portion is configured to be parallel to the terminal exposure portion.

12. The battery cell according to claim 7,
wherein the insulating gasket comprises:
a gasket exposure portion interposed between the terminal exposure portion and the battery housing; and
a gasket insertion portion interposed between the terminal insertion portion and the battery housing.

13. The battery cell according to claim 12,
wherein the diameter of the gasket insertion portion is configured to be larger than or equal to the diameter of the terminal insertion portion.

14. A battery pack comprising at least one battery cell as described in any one of claims 1 to 13.

15. A vehicle comprising at least one battery pack as described in claim 14.
